(19) **Europäisches Patentamt**

**European Patent Office**

**Office européen des brevets**

(11) **EP 1 680 954 A1**

(12) **EUROPEAN PATENT APPLICATION**

(43) Date of publication:
**19.07.2006 Bulletin 2006/29**

(51) Int Cl.:
*A01G 1/00* (2006.01)     *A01G 9/10* (2006.01)

(21) Application number: **06000709.3**

(22) Date of filing: **13.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.01.2005 JP 2005007100**

(71) Applicant: **Chisso Corporation
Osaka-shi,
Osaka-fu 530-0005 (JP)**

(72) Inventors:
• **Kimoto, Narutoshi
Minamata-shi
Kumamoto 867-0053 (JP)**
• **Sakamoto, Atsushi
Minamata-shi
Kumamoto 867-0053 (JP)**

(74) Representative: **HOFFMANN EITLE
Patent- und Rechtsanwälte
Arabellastrasse 4
81925 München (DE)**

(54) **Nursery bed for transplantation**

(57)     A nursery bed for transplantation formed in a connected-type pot for raising seedlings (1), including a medium layer made of medium base materials (3), a granular fertilizer layer (4) placed on the medium layer and made of granular fertilizers, and seeds (2) or plant bodies, in which the granular fertilizers contain a slow release nitrogen fertilizer and include 70 mass% or more granules having a granule size of 1 mm or more with a maximum granule size of the fertilizers of 2 mm or less, and a method of cultivating a plant using the nursery bed.

**Fig. 2**

EP 1 680 954 A1

**Description**

TECHNICAL FIELD

The present invention relates to a nursery bed for transplantation. More particularly, the present invention relates to a nursery bed for transplantation that is formed in a connected-type raising seedling pot for transplantation and a method of raising and cultivating a plant using the raising seedling.

BACKGROUND ART

Recently, with a development of new agricultural techniques, technical innovations on agricultural machinery, agricultural materials and so on have been made, realizing significant laborsaving in farm working. Also, in the field of raising seedlings, various technologies for raising seedlings and various materials to be used therefor have been developed (see, for example, "Manual for Utilization of Horticultural Materials and Apparatus for Raising Seedlings", Japan Greenhouse Horticulture Association, corporate juridical person, March 1991, p.30-73).

In particular, "cell raising seedling" , which is fast becoming popular, has various merits in that it reduces troubles and risks of raising seedlings by farmers, allows industrial production of seedlings to be carried out, and is open to division of labor. The cell raising seedling is performed using connected-type pots (also termed as cell trays) for raising seedlings, for example, connected-type plastic trays or connected-type paper pots.

In each cell (pot) of the connected-type pots is formed a raising seedling bed including various kinds of medium and culture soil (hereinafter, referred to "medium") base materials. A method that involves sowing seeds in the raising seedling bed, growing seedlings of, for example, vegetables, pulling the grown seedlings, and transplanting the seedlings is popular.

A medium having blended therein a base material containing mixed therewith a raw material with a specified granule size distribution and a surfactant in a specified ratios is disclosed as such a medium base material (see, for example, JP-A-08-37924). Also, a medium including an inorganic material with a base exchange capacity within the range of 50 to 200 meq/100 g, a non-wood type fiber organic material, a fertilizer nutrient, and a nitrification inhibitor (see, for example, JP-A-08-56478), a medium for plant raising seedlings containing a fertilizer nutrient whose granule size is 1 mm or less and a slow release nitrogen source compound in a ratio of 10 mg/L to 10 g/L in terms of nitrogen (see, for example, JP-A-10-19), and so on are disclosed.

However, the above-mentioned connected-type pots have smaller volume per cell than that of polypots conventionally used and hence the amount of medium to be filled is limited. For this reason, there arises the problem in that the fertilizer nutrient that is necessary for root taking of the seedling after transplantation from each cell to a field is hardly obtained sufficiently from the medium.

Further, as attempts to cause nursery beds to contain fertilizer nutrients that are necessary when raising seedlings, in particular nitrogen nutrients, which readily eluviate, there have been known various media. For example, a medium for raising paddy rice, which is a medium for raising seedling which is obtained by mixing a slow release fertilizer and a medium base material (water retention material) and capable of being applied to a real paddy field fertilizing simultaneously with transplantation is disclosed (see, for example, JP-A-52-107907), and a structure of nursery bed characterized by having a bed soil layer that retains moisture necessary for raising seedlings and supports the seedlings, a fertilizer/seed layer consisting of a slow release fertilizer whose solubility is chemically suppressed or whose elution speed is physically suppressed and seeds, the fertilizer/seed layer being an upper layer of the bed soil layer, and a cover soil layer that covers the fertilizer/seed layer, with the slow release fertilizer being present only in the fertilizer/ seed layer and the bed soil layer contains a fertilizer nutrient that is effective during a time of raising seedling is disclosed (see, for example, JP-A-07-236352).

Those media each relate to coated fertilizers that include granular fertilizer whose surface is coated with a resin or the like. When applied to connected-type pots having a small capacity, if the coated fertilizer has the same granule size as that of conventional granular fertilizer, the number of granules that can be applied to each cell is small. This leads to uneven growth among the cells due to fluctuation in the behavior of elution of the fertilizer nutrients or the like, causing the fear that seedling cannot be applied to mechanical transplantation.

Although coated fertilizers obtained by coating the surface of granular fertilizers with a small granule size with a resin or the like have been also developed, the coated fertilizers with small granule size are difficult to be mass-produced since the granular fertilizers as the core are crushed, the granules are combined each other to form aggregates, or the like when coating processing. As a result, such coated fertilizers are relatively expensive as compared with the conventional coated fertilizers having an ordinary granule size. Further, since the coated fertilizer has less binding force with the medium base material, depending on a using method, the fertilizer floats or flows away at the time of watering upon raising the seedlings, or spills out from each cell at the time of transplantation. Accordingly, the coated fertilizer has been considered to be difficult to be handled.

Even when the coated fertilizer is replaced with a slow release fertilizer whose dissolution is chemically suppressed, poor germination may occur owing to contact between the seed and the fertilizer.

DISCLOSURE OF THE INVENTION

It is an object of the present invention to provide a nursery bed for transplantation having the effects, for example, as follows :

(1) causing seedlings to grow or be harvested, i.e., from germination to just before transplantation in a synchronized manner;
(2) providing sufficient fertilizer nutrients necessary for root taking of the seedlings after the transplantation to real paddy field or the like;
(3) causing no barrier to growth when raising seedling, and hardly spilling over the fertilizer upon transplantation; and the like, and a method of cultivating a plant using the nursery bed for transplantation.

The inventors of the present invention have made extensive studies to achieve the above-mentioned objects and as a result, they have found that the above-mentioned objects can be achieved by a nursery bed for transplantation formed in a connected-type raising seedling pot having a medium layer made of medium base materials, a granular fertilizer layer placed on an upper part of the medium layer and made of granular fertilizers, and seeds or plant bodies, in which the granular fertilizers contain a slow release nitrogen fertilizer, include 70 mass% or more granules having a granule size of 1 mm or more, and a maximum granule size of the fertilizer is of 2 mm or less, and a method of cultivating a plant by using the nursery bed for transplantation. The present invention has been made based on this finding.

The present invention is constituted by the followings.

(1) A nursery bed for transplantation formed in a connected-type pot for raising seedlings, comprising:

a medium layer being made of medium base materials;
a granular fertilizer layer placed on an upper part of the medium layer, being made of granular fertilizers; and
seeds or plants;

wherein the granular fertilizers contain a slow release nitrogen fertilizer, include 70 mass% or more granules having a granule size of 1 mm or more, and a maximum granule size of the fertilizer is 2 mm or less.
(2) A nursery bed for transplantation according to (1), wherein the mass of the granule of the fertilizers is 0.5 to 5 mg per granule and a filling amount of the granular fertilizer in the cell is 10 to 1,000 granules/cell.
(3) A nursery bed for transplantation according to (1) or (2), wherein the granular fertilizer contains 0.001 to 10 mass% of a water-soluble nitrogen nutrient.
(4) A nursery bed for transplantation according to any one of (1) to (3), wherein the slow release nitrogen fertilizer is at least one selected from the group consisting of: acetaldehyde-condensed urea, isobutylaldehyde-condensed urea, a methylol-urea polymerization fertilizer, and a formaldehyde-amended urea fertilizer.
(5) A nursery bed for transplantation according to (4), wherein the granular fertilizer contains a hardly water-soluble phosphate fertilizer and/or a water-repellent substance.
(6) A method of preparing the nursery bed according to any one of (1) to (5), comprising:

filling medium base materials in bottoms of a connected-type raising seedling pot to form a medium layer;
sowing; and then
forming a granular fertilizer layer in a period of time from the sowing to the day before transplantation thereof.

(7) A method of cultivating a plant comprising using the nursery bed for transplantation according to any one of (1) to (5).

By using the nursery bed for transplantation, the following effects and the like are provided.

(1) The growth of seedlings from germination to just before transplantation occurs in a synchronized manner and in particular, seedlings suitable for mechanical transplantation can be obtained at low cost and with ease.
(2) The seedlings can be harvested in a well synchronized manner, so that production management becomes easier.
(3) The nursery bed for transplantation of the present invention uniformly contains fertilizer nutrients necessary for the growth of raising seedlings and the growth of the raising seedlings after the transplantation. Further, the nursery bed is capable of controlling the fertilizer efficiency for a long period of time even when the fertilizer granules in the nursery bed are small, so that barrier to growth on germination or growth of seedlings seldom occurs. Accordingly, the nursery bed for transplantation of the present invention is particularly suitable for transplanting culture of crops.

BRIEF DESCRIPTION OF THE DRAWINGS

[Fig. 1] A schematic illustration showing a connected-type pot for raising seedlings(cell tray);
[Fig. 2] A cross-sectional view showing the nursery bed for transplantation of the present invention; and
[Fig. 3] A cross-sectional view showing the nursery bed for transplantation of Comparative Example 2.

[DESCRIPTION OF SYMBOLS]

1     connected-type pot for raising seedlings
2     seed
3     medium base material
4     fertilizer of the present invention
5     granular fertilizers 5

DESCRIPTION OF THE PREFERRED EMBODIMENTS

The nursery bed for transplantation of the present invention is formed in a connected-type pot for raising seedlings and has a structure such that a granular fertilizer layer is formed on a medium layer made of a medium base material (water retention material).
The connected-type pot for raising seedlings to be used in the present invention is not particularly limited and can be selected from commercially available products depending on the kind of the crop. The connected-type pots for raising seedlings include those that meet the standard of the Ministry of Agriculture, Forestry and Fisheries of Japan or the standards of Zen-Noh (outer frame 590 mm x 300 mm) and other commercially available products. Specifically, connected-type pots for raising seedlings according to the standard of the Ministry of Agriculture, Forestry and Fisheries of Japan include, for example, 128 cell-type one (cell array of 8x16, cell size of 31 mm square x depth 44 mm) and a 200 cell-type one (cell array of 10x20, cell size of 26 mm square x depth 44 mm); connected-type pots for raising seedlings according to the standards of Zen-Noh include, for example, a 288-cell type one (cell array of 12x24, cell size of 21 mm square x depth 38.5 mm); commercially available connected-type pots for raising seedlings include, for example: Tray 20 - 288 hole one (cell size of 20 mm square x depth 40 mm). Tray 25 - 200 hole one (cell size of 25 mm square x depth 45 mm), Tray 30 - 128 hole one (cell size of 30 mm square x depth 45 mm), Tray 35 - 72 hole one (cell size of 35 mm square x depth 45 mm), Tray 45 - 55 hole one (cell size of 45 mm square x depth 45 mm), Tray 42 - 72 hole one (cell size of 42 mm square x depth 45 mm) each manufactured by Yanmar; paper pots such as Paper Pot (trade name) and Chain Pot (trade name) manufactured by Nippon Beet Sugar Manufacturing Co., Ltd.; Tray 800SQ (single cell volume of 1.5 mL), Tray 288LITE (single cell volume of 5.2 mL), Tray 288DEEP (single cell volume of 10.0 0mL), or Tray 128DEEP (single cell volume of 22.7 mL), and the like of a plug tray (outer frame of 546 mm x 280 mm) manufactured by Blackmore.

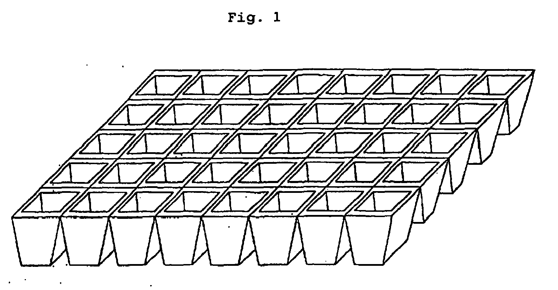

Fig. 1 shows an example of a connected-type pot for raising seedlings to be used in the present invention.
The granular fertilizer to be used in the granular fertilizer layer in the nursery bed for transplantation of the present invention contains 70 mass% or more, preferably 90 mass% or more of granules with a granule size of 1 mm or more and the maximum granule size of the granular fertilizer is 2 mm or less, preferably 1.5 mm or less. When the granule size is within the abovq-mentioned range, a urea-aliphatic aldehyde condensation product, which is a nutrient of the fertilizer elutes at a suitable speed and serves as a slow release fertilizer. Since the granular fertilizer of the present invention is of relatively small granules and uniform, the number of granules applied per cell (pot) can be secured and fluctuation of the amount of the applied fertilizer is small.
Note that the granular fertilizer layer may contain a fertilizer that contains almost no water-soluble fertilizer nutrient so far as the effect of the present invention is not damaged. The fertilizers that contain hardly water-soluble fertilizer nutrient include, for example, fused phosphate fertilizer and potassium silicate.
The granular fertilizer to be used in the present invention is formulated such that the mass of a granular fertilizer per granule is preferably 0.5 to 5 mg, more preferably 1 to 3 mg in order to increase absorption and utilization efficiency of the fertilizer nutrient by applying at the root thereof when the seedling is transplanted to a real field, thus allowing a high fertilizer efficiency to be exhibited. When the mass of the granular fertilizer per granule is within the above-mentioned range, a suitable number of applied granules per plant (or per seed) can be secured, resulting in that fluctuation in the amount of applied fertilizer seldom occurs, so that uniform and stabilized fertilizer efficiency can be obtained. Here, the mass of the fertilizer per granule can be measured granule after granule. However, an average value obtained by measuring the mass of, for example, 100 granules may be used.

In the present invention, each cell of a raising seedling pot for transplantation (for example, in Fig. 1) requires one or more granules of the granular fertilizer. Preferably, the filling amount of the granular fertilizer is 10 to 1,000 granules/cell, more preferably 30 to 500 granules/cell. When the filling amount of the granular fertilizer is below the above-mentioned lower limit value, seedlings unsuitable for transplantation due to fluctuation of fertilizer nutrients among the cells may grow and further poor growth as a result of short of the fertilizer probably occurs. If the filling amount of the granular fertilizer is above the above-mentioned upper limit value, the ratio of the granular fertilizer in the cell volume could increase to deteriorate the water retention ability as basic physical properties of the medium base material. This is not preferable.

The granular fertilizer to be used in the granular fertilizer layer in the nursery bed for transplantation of the present invention contains a slow release nitrogen fertilizer as a main nutrient (the nutrient with the largest content) of the nitrogen fertilizer nutrient in the nursery bed for transplantation. Specifically, it is preferable that the slow release nitrogen fertilizer be contained in an amount of 80.0 to 99.9 mass%, more preferably 85.0 to 99.0 mass% with respect to the total mass of the nitrogen fertilizer. It is preferable that the slow release nitrogen fertilizer is not a coated fertilizer. The preferable slow release nitrogen fertilizer includes, for example, a urea-aliphatic aldehyde condensation product.

The urea-aliphatic aldehyde condensation product to be used in the present invention is not particularly limited and urea-aliphatic aldehyde condensation products of any one of straight- or branched-chain, or cyclic molecular structures can be used. Specific examples thereof can include an acetaldehyde-condensed urea, isobutylaldehyde-condensed urea, methylol-urea polymerization fertilizer, and formaldehyde-amended urea fertilizer prescribed by the Fertilizer Law (official standards on ordinary fertilizers, kind of fertilizer). In the present invention, one or more kinds of the above-mentioned urea-aliphatic aldehyde condensation products may be arbitrarily selected and used.

The granular fertilizer to be used in the present invention contains as a fertilizer nutrient a nitrogen nutrient in an amount of preferably 25.0 to 42.0 mass%, more preferably 30.0 to 35.0 mass%.

The granular fertilizer to be used in the present invention contains as a fertilizer nutrient a water-soluble nitrogen nutrient in an amount of preferably 0.001 to 10 mass%, more preferably 1 to 7 mass% with respect to the total mass of the nitrogen nutrient in terms of nitrogen. If the content of the water-soluble nitrogen nutrient is within the above-mentioned range, the characteristics of the urea-aliphatic aldehyde condensation product which is a hardly water-soluble nitrogen fertilizer can be supplemented without causing poor or retarded growth such as retarded growth at the initial stage of culture, abnormal leaf color, and withering death. When it is intended to obtain a fertilizer consisting of the urea-aliphatic aldehyde condensation product alone, the cost increases because a purification step must be mediated and is not practical. The water-soluble nitrogen nutrients can include, for example, urea, ammonium sulfate, ammonium chloride, and ammonium nitrate.

The water-soluble nitrogen nutrients to be used in the present invention can be measured according to a fertilizer analysis method (for example, "Fertilizer Analysis Method (1992)", edited by Agricultural Environment technical Institute, Ministry of Agriculture, Forestry and Fisheries of Japan, published by Japan Fertilizer Assay Association, December 1992, p. 26-27) whereas as far as the nutrients contained are known, the sum of analytical values of water-soluble nitrogen nutrients such as ammonium nitrogen, nitrate nitrogen, and urea-form nitrogen is used as the water-soluble nitrogen nutrients.

When the urea-aliphatic aldehyde condensation products are mainly used to the slow release nitrogen fertilizer in the present invention, it is preferable that hardly water-soluble phosphate fertilizer be further added to the granular fertilizer in order to promote the conversion of the slow release nitrogen fertilizer into inorganic materials to sufficiently exhibit fertilizer efficiency.

The hardly water-soluble phosphate fertilizer is not particularly limited as far as it is hardly soluble in water and can provide a phosphate nutrient necessary for normal growth of a plant. The hardly water-soluble phosphate fertilizer may be one consisting mainly of a phosphate compound having a low solubility. In addition, examples thereof include a fertilizer obtained by insolubilizing water-soluble phosphate nutrient to make it hardly water-soluble, a fertilizer obtained by coating the surface of a granular phosphate fertilizer with a water-insoluble or hydrophobic substance, and further a fertilizer obtained by mixing a fine powder of a phosphate fertilizer and a water-insoluble or hydrophobic fine powder of other than the phosphate fertilizer and corrugating the mixture.

Among them, the phosphate compound having a low solubility can be used relatively easily and thus is preferable. Specifically, the phosphate compound having a low solubility is preferably a substance having a solubility in water at 20°C of 5 g/100 mL or less. Examples of the substance include fused phosphate fertilizer, processed phosphate fertilizer, humic acid-mixed phosphate fertilizer, calcined phosphate fertilizer, rhenania phosphate fertilizer, by-produced dicalcium phosphate, by-produced tricalcium phosphate, Thomas phosphate fertilizer, potassium metaphosphate, calcium metaphosphate, magnesium metaphosphate, potassium magnesium metaphosphate, and phosphate rock. Of those, fused phosphate fertilizer, calcined phosphate fertilizer, and phosphate rock can be preferably used in the present invention because of a low solubility in water.

The hardly water-soluble phosphate fertilizer is particularly preferably one that has elution property as expressed by an elution time required of 0.1 to 2,000 minutes. Here, the elution time is defined by a time for which 80 mass% of phosphate nutrient of a hardly soluble phosphate fertilizer is eluted with 2 mass% aqueous citric acid solution when the hardly water-soluble phosphate fertilizer is immersed in the 2 mass% aqueous citric acid solution at 30°C in a mass ratio indicated by the following equation:

$$\text{Equation: hardly water-soluble phosphate fertilizer/2 mass\% aqueous citric acid solution (mass ratio)} = 0.013$$

Specifically, the elution time can be measured by the following method. That is, 2 g of a hardly water-soluble phosphate fertilizer and 150 mL of a 2 mass% aqueous citric acid solution heated to 30°C are fed in a 300 mL-polyethylene bottle and the bottle is shaken in a shaking incubator at 30°C. A small amount of supernatant of the aqueous citric acid solution is taken out with time, diluted with water, and then the phosphate nutrient in the diluted solution is determined by ion chromatography, followed by preparing an elution curve. Thus, the time required for 80 mass% of the phosphate nutrient contained in the hardly water-soluble phosphate fertilizer to be eluted can be determined.

When the elution time is within the range of 0.1 to 2,000 minutes, it is possible to easily control the speed of conversion of the urea-aliphatic aldehyde condensation product into inorganic material. When the elution time is less than 0.1 minute, or more than 2,000 minutes, it may become difficult to control the speed of conversion of the condensation product into inorganic materials.

In order for the elution time of a hardly water-soluble phosphate fertilizer to be within 0.1 to 2,000 minutes, the hardly water-soluble fertilizer preferably has a low solubility in water and constituted of a single crystal. Further, when the shape is granular, it is preferable that the granules have fewer voids therein.

The methods of controlling the elution time of the hardly water-soluble phosphate fertilizer within the range of 0.1 to 2,000 minutes are not particularly limited. For example, they include a method of formulating the hardly water-soluble phosphate fertilizer into a granular fertilizer with a controlled granule size, a method of covering the surface of the granular hardly water-soluble phosphate fertilizer with a water-insoluble or hydrophobic substance, and a method of mixing fine powder of a hardly water-soluble phosphate fertilizer with a water-insoluble or hydrophobic fine powder and granulating the resulting mixture.

Of those, the method of formulating the hardly water-soluble phosphate fertilizer into a granular fertilizer with a controlled granule size can be practiced relatively easily and thus is preferable. In this case, the granule size may vary depending on the kind of the hardly water-soluble phosphate fertilizer to be used and the required elution time. However, it is preferable that the granule size be within the range of 0.01 to 0.5 mm from the viewpoint of production and control of the speed of conversion of the urea-aliphatic aldehyde condensation product into inorganic materials.

In the present invention, the addition ratio of the hardly water-soluble phosphate fertilizer to the urea-aliphatic aldehyde condensation product is not particularly limited. However, it is preferable to be within the range of 0.01 to 5 mass% in terms of $P_2O_5$ with respect to the urea-aliphatic aldehyde condensation product. When the addition ratio of the hardly water-soluble phosphate fertilizer is within this range, it is possible to effectively control the speed of conversion of the urea-aliphatic aldehyde condensation product into inorganic materials.

Among the above-mentioned urea-aliphatic aldehyde condensation products, 2-oxo-4-methyl-6-ureidohexahydropyrimidine (hereinafter, referred to as "CDU"), which is an urea-aliphatic aldehyde condensation product of which control of the speed of conversion into inorganic materials is particularly difficult, methylol/urea polymerized fertilizer, and formaldehyde-amended urea fertilizer exhibit the effects of the present invention significantly.

Note that, in order to obtain the effects of addition of the hardly water-soluble phosphate fertilizer to the urea-aliphatic aldehyde condensation product the present invention more stably, the ratio of the content of the water-soluble phosphate nutrients contained in the granular fertilizer is preferably 0.5 mass% or less in terms of $P_2O_5$ with respect to the urea-aliphatic aldehyde condensation product. From this point of view, the phosphate fertilizer to be used in the present invention is preferably a calcined phosphate fertilizer and/or a fused phosphate fertilizer. When fertilizers each containing a phosphate nutrient such as a phosphate fertilizer, a low-analysis compound fertilizer, a two- nutrients complex compound fertilizer, a high-analysis compound fertilizer, and an organic fertilizer are used as the hardly water-soluble phosphate fertilizer, they are preferably used by taking into consideration the elution time and content of the contained phosphate nutrients.

Inclusion of a water-repellent substance in the urea-aliphatic aldehyde condensation product containing the hardly water-soluble phosphate fertilizer results in suppression of dissolution of the hardly water-soluble phosphate fertilizer and the urea-aliphatic aldehyde condensation product in soil, to thereby allow the condensation product efficiency of the hardly water-soluble phosphate fertilizer to be controlled within a further broader range.

The water-repellent substance to be used in the granular fertilizer is not particularly limited as far as it has dampproof or waterproof properties. Among such water-repellent substances, those each having a melting point of 60°C to 130°C, preferably 60°C to 100°C are able to be preferably used in the present invention. When the melting point of the water-repellent substance is 60°C or more, the storage stability of the granular fertilizer at summer seasons is acceptable and when the melting point of the water-repellent substance is 130°C or less, it is unnecessary to perform a heat treatment for the granular fertilizer at a temperature of higher than 130°C upon production of the granular fertilizer, so that the granular fertilizer is difficult to be decomposed upon production thereof.

In the present invention, it is preferable that one or more water-repellent substancesselectedfrom naturalwaxes and synthetic waxes be used as appropriate. The natural waxes include plant waxes such as candelilla wax, carnauba wax, rice wax, Japan wax, and jojoba oil, animal waxes such as bees wax, lanolin, and whale wax, mineral waxes such as montan wax, ozocerite, and ceresin wax, and petroleum waxes such as paraffin wax, microcrystalline wax, and petrolatum. The synthetic waxes include synthetic hydrocarbons such as Fischer-Tropsch wax, polyethylene wax, and polypropylene wax, modified waxes such as montan wax derivatives, paraffin wax derivatives, and microcrystalline wax derivatives, hydrogenated waxes such as hardened castor oil and hardened castor oil derivatives, 12-hydroxystearic acid, stearamide, phthalimide anhydride, and chlorinated hydrocarbons. Of those, hardened castor oil and derivatives thereof are effective for controlling the speed of mineralization of the urea-aliphatic aldehyde condensation product.

In the present invention, the content ratio of the water-repellent substance is preferably 0.1 to 20 mass%, more preferably 1 to 15 mass% with respect to the total mass of the hardly water-soluble phosphate fertilizer, the water-repellent substance, the water-soluble fertilizer, and the slow release nitrogen fertilizer. When the content ratio of the water-repellent substance is within the above-mentioned range, the effect of the water-repellent substance is satisfactory without a greater increase in the production cost.

In the present invention, as far as the effect of the present invention is not damaged, nutrients other than the nutrients such as the slow release fertilizer, the water-soluble nitrogen nutrient, the hardly water-soluble phosphate fertilizer, and the water-repellent substance can be used as rawmaterials of the granular fertilizer. Such nutrients can include fertilizers other than the slow release fertilizer, the hardly water-soluble phosphate fertilizer, and the water-soluble nitrogen nutrient, various granulating aids, binders, and so on. Such nutrients are added to the fertilizer composition preferably when the slow release fertilizer, the water-soluble nitrogen nutrient, the hardly water-soluble phosphate fertilizer, and the water-repellent substance are mixed.

The granular fertilizer may be a mixed fertilizer comprising the above-mentioned granular fertilizer and a hardly water-soluble granular fertilizer not containing the slow release nitrogen fertilizer nutrient.

The fertilizers other than the slow release fertilizer, the hardly water-soluble phosphate fertilizer, and the water-soluble nitrogen nutrient can include, organic material fertilizers such as bone powder, oilcake, and meat cake, calcic fertilizers, magnesian fertilizers, silicic fertilizers, and trace element fertilizers as well as fertilizers that have a solubility in pure water at 20°C of less than 5 g/100 mL and contain a phosphate ($P_2O_5$) nutrient or a potassium ($K_2O$) nutrient. In the present invention, one or more fertilizers may be selected from those fertilizers as necessary.

Examples of a granulating aid can include: mineral matters such as bentonite, clay, kaolin, sericite, talc, acid clay, pumice, silica sand, silica stone, zeolite, pearlite, and vermiculite; and vegetable matters such as a rice hull, sawdust, ligneous powder, pulp flock, and soybean powder. In the present invention, one or more kinds of granulating aids selected from those granulating aids may be used as required.

Examples of a binder can include gum arabic, sodium alginate, glycerin, gelatin, molasses, microcrystalline cellulose, pitch, carboxymethylcellulose, hydroxyethylcellulose, hydroxypropylcellulose, sodium polyacrylate, polyvinyl pyrrolidone, aluminasol, cement, sodium polyphosphate, lignin sulfonate, polyvinyl alcohol, polyethylene glycol, a surfactant, starch, and a thermosetting resin raw material. In the present invention, one or more kinds of binders selected from those binders may be used as required.

The nursery bed for transplantation according to the present invention contains a medium base material (water retention material) under the above-mentioned granular fertilizer layer. Any material that can retain moisture necessary for raising seedling can be used as the medium base material. Specific examples thereof include soils, plant fiber materials that are light in weight and excellent in water retaining property, and mineral materials.

Examples of the soil can include natural soils such as alluvial soil, diluvial soil, volcanic soil, Kanuma soil, Bora soil (Hyuga soil), and humic soil as well as soil formed by a water purification plant. In the present invention, dry sterilized soils obtained by sterilizing the soils by heating or the like are preferable. Examples of such sterilized soil can include granulated reddish soil (manufactured by Soil Co., Ltd., sterilized reddish soil), granulated black dirt (manufactured by Soil Co., Ltd., sterilized black dirt), and sterilized Bora soil.

Examples of the plant fiber materials include peat moss, coconut shell (debris or the like obtained by extracting rigid long fiber and medium and short fibers from mesocarp, i.e., a residue obtained by extracting the exocarp and endocarp from the pericarp of coconut), bark, wood pulp, rice husk, and sawdust. Examples of the mineral materials include calcined vermiculite, bentonite, and zeolite. Also, calcined residual sand that remains upon calcination of vermiculite may be used. Further, mixtures of those may be used.

The medium base material of the nursery bed for transplantation of the present invention can be blended with artificial fibers such as granular cotton, carbides of organic substances such as charcoal and baked rice husk, and soil amendments such as pearlite and urea resin foam.

The ratio of the medium base material (water retaining material) contained in the nursery bed for transplantation according to the present invention is preferably within the range of 10 to 70 mass% with respect to the mass of the nursery bed. Note that the bulk density of the medium base material is preferably 0.2 to 0.7 g/cm$^3$.

The nursery bed for transplantation according to the present invention preferably contains a water-soluble nitrogen fertilizer. The content of the water-soluble nitrogen fertilizer nutrient in the nursery bed for transplantation according to the present invention may be arbitrarily adjusted such that the total of the amount of water-soluble nitrogen nutrient in the granular fertilizer and the amount of water-soluble nitrogen nutrient in the medium base material (water retaining material) does not adversely affect the plant. As a rough indication, although it depends on the bulk density of the medium base material, it is preferable that the nursery bed contain the water-soluble nitrogen nutrient in a ratio of 10 mg/L to 10 g/L, more preferably 10 mg/L to 1 g/L.

When the ratio of the water-soluble nitrogen nutrient in the nursery bed for transplantation according to the present invention is within the above-mentioned range, the nitrogen nutrient that is necessary for raising seedling can be secured with the water-soluble nitrogen nutrient while the nitrogen nutrient that is necessary after the transplantation can be supplied to the seedling by controlling the fertilizer efficiency of the slow release nitrogen fertilizer.

Fertilizers that contain nutrients such as phosphate ($P_2O_5$) and potassium ($K_2O$) can be added to the medium base material (water retaining material) in the nursery bed for transplantation according to the present invention as required. As a rough indication, the content of those nutrients as phosphate ($P_2O_5$) and potassium ($K_2O$) in the nursery bed each is within the range of 10 mg/L to 10 g/L, more preferably 10 mg/L to 1 g/L.

Specific examples of the fertilizers to be used as described above can include water-soluble nitrogen fertilizers such as urea, ammonium sulfate, ammonium chloride, and ammonium nitrate, phosphate fertilizers such as fused phosphorous, monoammonium phosphate, diammonium phosphate, calcium superphosphate, double superphosphate, multi-phosphate, and magnesium multi-phosphate, potassium fertilizers such as potassium sulfate, potassium chloride, potassium bicarbonate, and potassium humate, trace element fertilizers, and mixtures of those.

In addition, the nursery bed for transplantation according to the present invention can contain bactericides, pesticides, plant growth regulators, surfactants, and so on as necessary in suitable amounts so far as they do not inhibit the effects of the present invention.

Since the volume of the nursery bed for transplantation according to the present invention may be decreased owing to watering or the like during raising seedling, cover soil can be laid above the granular fertilizer layer to form a cover soil layer as far as it does not inhibit the effects of the present invention.

In preparing the nursery bed for transplantation according to the present invention, formation of the granular fertilizer layer may be performed at any time before transplantation on the medium layer made of the medium base material filled on the bottoms (lower layer) in a connected-type pot for raising seedlings where seeds are sawn. The granular fertilizer layer contains a slow release fertilizer and granular fertilizers containing 70 mass% or more of granules with a granule size of 1 mm or more with a maximum granule size being 2 mm or less. To uniformly distribute the granular fertilizer to each cell easily, the formation of the granular fertilizer layer is preferably performed from the sowing to the day before the transplantation of the nursery bed to avoid the time before the transplantation when work density is high. More preferably, the formation of the granular fertilizer is performed before germination when there is no disturbance on the surface of the medium layer. When the granular fertilizer is applied after germination, it is preferable that the surface of the plant that would be disturbance be dry. For this purpose, watering just before the application should be avoided and it is preferable that watering be carried out after the application to wash down the granular fertilizer attached to the surface of the plant to the surface of the medium layer.

In the method of cultivating a plant using the nursery bed for transplantation according to the present invention, target crops, fertility management methods, and so on are not particularly limited. In particular, with the nursery bed for transplantation according to the present invention, because of use of the water-soluble fertilizer and slow release nitrogen fertilizer in combination, it is possible to increase the amount of the fertilizer contained in the nursery bed when raising seedling of paddy rice, vegetables, flowers, fruits, trees, and so on to which application of fertilizers has been considered difficult conventionally. The nursery bed for transplantation according to the present invention has the advantage in that no overfertilization occurs even when the fertilizer to be used is not a coated fertilizer. As far as the effects of the present invention are not damaged, a small amount of the water-soluble fertilizer may be added.

With the use of the nursery bed for transplantation according to the present invention, by controlling the fertilizer efficiency of the slow release nitrogen fertilizer for a long period of time while a readily available nutrient of the fertilizer is supplied by the water-soluble fertilizer in just ratio, top-dressing can be eliminated and the number of granules per unit area or per plant can be increased since the granule size of the granular fertilizer is small. Therefore, the nursery bed for transplantation according to the present invention is suitable for cultivation of plants such as food crops, garden crops, and ornamental crops that are transplanted after they are grown in connected-type pots for raising seedlings.

EXAMPLES

Hereinafter, the present invention is described in more detail by way of examples. However, the present invention is not limited by those examples. Note that all percentages (%) in the following examples are "mass%" unless otherwise indicated specifically.

Examination methods used in the examples and comparative examples are as follows.

(1) Fertilizer nutrients (nitrogen, phosphate, potassium)

Nitrogen (N): to 50 g of medium was added 300 mL of a nitrogen nutrient extracting preparation (KCl - HCl solution; this was prepared by dissolving 315 g of special grade potassium chloride in 3 liters of purified water and adding 150 mL of hydrochloric acid to the resultant) , the mixture was stirred for 1 hour and filtered to obtain an extraction solution. Then amount of inorganic nitrogen was measured by a method of simultaneously percolation measurement of ammonium nitrogen, nitrite nitrogen, and nitrate nitrogen (the method described in "Soil Nutrients Analysis Methods", Yokendo, December 1970, p. 197-200) (measured value 1), and CDU nitrogen amount was separately measured by the dimethylaminobenzaldehyde method (the method described in "Revised Detailed Solution to Fertilizer Analysis Method", Yokendo, January 1973, p.69-72) (measured value 2). The sum of the measured values 1 and 2 was taken as a measured value of nitrogen, followed by calculating nitrogen nutrient (mg/L) from this based on an apparent bulk density of medium (kg/L).

Phosphate ($P_2O_5$): a phosphate nutrient was extracted with a 2% aqueous citric acid solution according to the method described in Agricultural Environment Technology Institute, the Ministry of Agriculture, Forestry and Fisheries Japan, "Fertilizer Analysis Method (1992)" (Japan Fertilizer and Feed Inspection Association, incorporated foundation, December 1992) and calculated in the same manner as that in the case of the above-mentioned nitrogen.

Potassium ($K_2O$): a potassium nutrient was measured according to the section of water-soluble cation in Soil Standard Analysis/Measurement Method Committee, ed., "Soil Standard Analysis/Measurement Method" (Hakuyusha, November 1986), and calculated in the same manner as in the case of the above-mentioned nitrogen.

(2) Apparent bulk density of the medium

Apparent bulk density of the medium was obtained by using a Yamanaka-type weight-of-unit-volume measurement device to obtain a value of mass (kg) of a medium in the measuring device and a volume (liter) of the measuring device, and dividing the value of the mass of the medium by the volume of the measuring device.

(3) pH, EC, moisture

According to Soil Standard Analysis/Measurement Method Committee, ed., "Soil Standard Analysis/Measurement Method" (Hakuyusha, November 1986), pH was measured by the glass electrode method, EC (electric conductivity) was measured by the 1:5 water leaching method, and moisture was measured by dry heating.

(Synthesis example of urea-aliphatic aldehyde condensation product (CDU))

60 g of urea was dissolved in 60 mL of water. The solution was added with 8.5 mL of concentrated hydrochloric acid and under ice-cooling, 30 g of acetaldehyde was dropped. The resultant was stirred at 50°C for 4 hours for reaction and the precipitated crystals were filtered, washed with water, and then dried under reduced pressure to thereby obtain CDU (purity: 99.9 mass% or more). The obtained CDU was sieved and powder that passed a mesh with an opening of 150 $\mu$m was used in the following examinations. Note that the content of water-soluble fertilizer such as urea in the CDU powder was 0.05 mass% or less (determined by thin layer chromatography).

Production Example 1 for granular fertilizer (granular fertilizers 1 to 6)

The above-mentioned CDU powder and urea (having a solubility in purified water at 20°C of 107.7 g/100 mL) were fed in a 50-liter spherical mixer in ratios shown in Table 1 so that the sum of the fed amounts was 20 kg, and the whole was mixed for 5 minutes to obtain a mixture.

Then, 1 kg of the mixture was fed in a pan granulator with a diameter of 120 cm and the mixture was rotated at a rotation speed of 40 r/min while adding water and the mixture a little bit at a time to perform granulation until the average granule size of the resulting granules reaches about 1.3 mm. After the granulation, the obtained granules were dried using a hot air circulating drier under conditions of 120°C for 6 hours, and further classified with a shaking sieve to obtain granular fertilizer 1 having a granule size of 1.18 to 1.40 mm. Further, in the same manner as that in the case of the granular fertilizer 1, granular fertilizers 2 to 4 were obtained by making the sum of the amounts of the fed raw materials in ratios shown in Table 1 to be 20 kg.

Further, when producing the granular fertilizer 3, the granular fertilizer was classified by a shaking sieve to simultaneously obtain granular fertilizer 5 with a granule size of 2.5 to 4.1 mm and granular fertilizer 6 with a granule size of less than 1.18 mm. The granular fertilizer 6 contained granules that passed the sieve with an opening of 1 mm in a ratio of 40 mass%.

Production Example 2 for granular fertilizer (granular fertilizer 7)

A commercially available formaldehyde-amended urea' fertilizer (trade name "Organite", manufactured by Mitsui Toatsu Fertilizer Co. , Ltd.) was pulverized and then regranulated to obtain a granular fertilizer 7 with a granule size of 1.18 to 1.70 mm. The granular fertilizer 7 had a nitrogen content of 39.5% in which a content of water-soluble nitrogen nutrients was 17.0% (the content of the water-soluble nitrogen nutrient was a value measured by an official method). The mass of the granular fertilizer 7 per granule (n=100) was 1.4 mg.

Production Example 1 for a medium base material

Calcined vermiculite (2 mm sieve-passed preparation, apparent bulk density 0.11 [kg/l], pH (mass ratio 1:5 water) 8.1), peat moss (3 mm sieve-passed preparation, apparent bulk density 0.11 [kg/l], pH (mass ratio 1:5 water) 4.2), and sterilized Bora soil (4 mm sieve-passed preparation, apparent bulk density 0.85 [kg/l], pH (mass ratio 1: 5 water) 5.5) were mixed in a volume ratio of 70:23:7 to obtain a water retaining material mixture. To the water retaining material mixture, mixed was an aqueous solution of multi-phosphate, aqueous phosphoric acid solution (32%), and potassium sulfate as the fertilizer nutrient in a mass ratio of 633:367 in a rotary vessel type mixer (volume; 1 m$^3$, rotation number; 12 r/min) sufficiently until the mixture becomes uniform to obtain a medium base material, The medium base material was used in Examples 1 to 5 and Comparative Examples 1 to 4.

The physical and chemical properties of the medium base material just after production had apparent bulk density 0.38 [kg/l], pH (mass ratio 1:5 water) 6.2, EC (mass ratio 1:5 water) 0.5 mS/cm, moisture content was 35 mass%, and the fertilizer nutrient consisted of nitrogen 0 mg/1, phosphate ($P_2O_5$) 1,115 mg/1, and potassium ($K_2O$) 152 mg/1.

Production Example 2 for a medium base material

A medium base material was produced in the same manner as that in Production Example 1 for a medium base material except that urea was added as the fertilizer nutrient such that the nitrogen was 150 mg/l, and the medium base material was used in Example 6. The physical and chemical properties of the medium base material just after production were the same as those of the medium base material produced in Production Example 1 for a medium base material except for the nitrogen nutrient.

Example 1

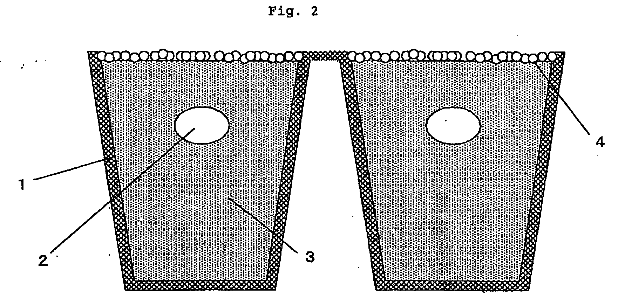

In a Yanmar Tray 30-128 Hole (tradename, manufactured by Yanmar Agricultural Equipment Co., Ltd., cell volume 30 mm square x depth 45 mm, 128 holes), a connected-type pot for raising seedlings, was filled the medium base material produced in Production Example 1 and then cabbage (cultivar "YR Tenkuu", Takii Seed Co. , Ltd.) was sown and implanted in the medium base material. Then, the granular fertilizer 1 in a total amount of 50 g was applied from above the tray such that the fertilizer was applied uniformly to all 128 cells to obtain a nursery bed for transplantation. From the granule mass in Table 1, a number of granule per cell was calculated to be 244 granules/cell. The cross-sectional view of the obtained nursery bed for transplantation is shown in Fig. 2.

Examples 2 to 4

Nursery beds for transplantation were obtained in the same manner as that in Example 1 except that the granular fertilizer 1 in Example 1 was replaced by the granular fertilizers 2 to 4. From the granule mass in Table 1, a number of granule per cell of the nursery beds for transplantation was calculated to be 230, 230, and 260 granules/cell, respectively.

Example 5

In Example 1, the granular fertilizer 1 was replaced by the granular fertilizer 7 and the granular fertilizer 7 in a total amount of 10 g was applied from above the tray such that the fertilizer was applied uniformly to all 128 cells to obtain a nursery bed for transplantation. From the above-mentioned granule mass, a number of granule per cell was calculated to be 56 granules/cell.

Example 6

In a Yanmar Tray 3 0 - 128 Hole (trade name, manufactured by Yanmar Agricultural Equipment Co., Ltd., cell volume 30 mm square x depth 45 mm, 128 holes), a connected-type pot for raising seedlings was filled with the medium base material produced in Production Example 2 and then cabbage (cultivar "YR Tenkuu", Takii Seed Co., Ltd.) was sown and implanted in the medium base material. In the cultivation test 1 described later, 27 days after the sowing and raising (3 days before transplantation of the nursery bed), granular fertilizer 3 in a total amount of 50 g was applied from above the tray such that the fertilizer 3 was applied uniformly on the entire tray, and adequate watering was performed immediately after the application to obtain a nursery bed for transplantation.

| Table 1 | Raw material composition (mass ratio) | | | | Content of nitrogen nutrients [%] | Content of water-soluble nitrogen nutrients [%] | Granule mass [mg/granule] | Content of granules with granule size of 1 mm or more [%] | Granule size [mm] |
|---|---|---|---|---|---|---|---|---|---|
| | CDU | Fused phosphate fertilizer | Urea | Water-repellent substance | | | | | |
| Granular fertilizer 1 | 98 | - | 2 | - | 32.9 | 2.8 | 1.6 | 100 | 1.18-1.4 |
| Granular fertilizer 2 | 97 | 1 | 2 | - | 32.6 | 2.9 | 1.7 | 100 | 1.18-1.4 |
| Granular fertilizer 3 | 90 | 3 | 2 | 5 | 30.3 | 3.1 | 1.7 | 100 | 1.18-1.4 |
| Granular fertilizer 4 | 88 | - | 12 | - | 34.3 | 16.3 | 1.5 | 100 | 1.18-1.4 |
| Granular fertilizer 5 | 90 | 3 | 2 | 5 | 30.3 | 3.1 | 15.3 | 100 | 2.5-4.1 |
| Granular fertilizer 6 | 90 | 3 | 2 | 5 | 30.3 | 3.1 | 1.0 | 60 | Less than 1.18 |

The content of nitrogen nutrients was a value measured by a fertilizer analysis method (sulfuric acid method).

The content of water-soluble nitrogen fertilizer nutrients was calculated from the ratio of the water-soluble nitrogen nutrient (sum of urea-form nitrogen and ammonium nitrogen) to the content of the nitrogen nutrient.

Fused phosphate fertilizer: Manufactured by Minami Kyushu Kagaku Kogyo Co., Ltd., sieved preparation of Kumiai fused phosphate 20-15-20 (trade name) (passed 180 μm sieve but not passed 150 μm sieve).
Urea: Manufactured by Kanto Kagaku Co., Ltd., special grade reagent.
Water-repellent substance: Castor Wax FP (trade name), manufactured by Kokura Gosei Kogyo Co., Ltd., hardened castor oil, melting point 81°C.
Mass per granule was an average value obtained from a mass of 100 granules.

Comparative Examples 1 to 3

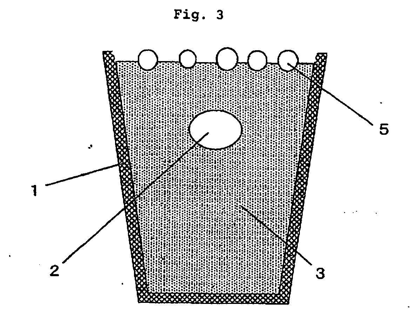

Nursery beds for transplantation were produced in the same manner as that in Example 1 except that in Example 1 the granular fertilizer 1 was replaced by Kumiai 31.0 CDU nitrogen powder preparation (trade name, manufactured by Chisso Asahi Fertilizer Co., Ltd. , granularity 1.00 mm sieve passed, mass per granule less than 0.5 mg), granular fertilizer 5, and granular fertilizer 6 and named Comparative Examples 1, 2, and 3, respectively. The filling amount per cell of Comparative Example 1 was about 0.4 g. Note that the fertilizer of Comparative Example 1 was powdery and number of granule could not be counted. From the granule masses in Table 1, numbers of granules per cell of Comparative Examples 2 and 3 were counted to be 26 and 391 granule/cell, respectively. The cross-sectional view of Comparative Example 2 is shown in Fig. 3.

Comparative Example 4

In a Yanmar Tray 30-128 Hole (trade name, manufactured by Yanmar Agricultural Equipment Co., Ltd., cell volume 30 mm square x depth 45 mm, 128 holes), a medium base material was filled to a depth of 25 mm in each cell and then cabbage (cultivar "YR Tenkuu", Takii Seed Co., Ltd.) was sown. At the same time the granular fertilizer 7 in a total amount of 10 g was applied from above the tray such that the granular fertilizer 7 was applied uniformly to all 128 cells to form a fertilizer/seed layer, and the medium base material was covered and filled to form a nursery bed for transplantation.

Cultivation Test 1

Using the nursery beds produced in Examples 1 to 6 and Comparative Examples 1 to 4, raising seedling was performed for 30 days and the states of the nursery beds were examined. All the raising seedlings were performed in a greenhouse with a transparent polyolefin film (trade name: Agritop High Power, manufactured by Chisso Corporation) extended thereover, by a conventional method without heating except that sufficient watering was performed. After the raising seedling and transplantation to field, cultivation was performed by a conventional method.

As a result of Cultivation Test 1, seedlings raised using the nursery beds of Examples 1 to 6 of the present invention for each cell showed a uniform growth to a height of 9 cm with a number of leaves of about 2 and good root spread, so that they could be easily transplanted to a field. Examples 1 to 3 and 6 showed continued fertilizer efficiency after the transplantation. In particular, Example 6 showed a fertilizer efficiency that extended over a long period of time. Thus, it was apparent that the nursery beds of the present invention contained fertilizer nutrients necessary for the growth of the seedlings uniformly and sufficiently and that the water-soluble fertilizer nutrient of the nursery beds did not have bad influences on germination of seeds and growth of seedlings.

Examples 2 and 3 showed more uniform yields than Examples 4, 5 and 6. In Examples 2 and 3, it was observed that the decomposition (mineralization) of the urea-aliphatic aldehyde condensation product contained therein was controlled. Example 6 showed slight unevenness in application, which was considered to be ascribable to existence of seedlings on the ground that were barriers to application.

In test plots where the raising seedling medium of Comparative Examples 1, 3 and 4 were used for raising seedling, growth damages was observed. In the case of Comparative Examples 1 and 4, growth damages due to high concentration of the water-soluble fertilizer nutrient occurred while in the case of Comparative Example 3, the seedling was succulent growth with poor root spread. This is presumed to be due to a high rate of mineralization of the urea-aliphatic aldehyde condensation and the effect of the water-soluble nitrogen nutrient that was attributed in excess amount.

In the case of Comparative Example 2, unevenness among cells is large and seedlings were not grown uniformly. This would be reflected that since the granular fertilizer contained in the nursery bed had a large granule size and the cell volume of the connected-type pot for raising seedlings (cell tray) was small, the number of granules was not uniform among the cells, so that there was unevenness in the content of the granular fertilizer per cell.

Example 7

In a Yanmar Tray 20-288 Hole (trade name, manufactured by Yanmar Agricultural Equipment Co., Ltd., cell volume 20 mm square x depth 40 mm, 288 holes), was filled with a Yosaku glowing medium for allium crops (trade name, manufactured by Chisso Asahi Fertilizer Co., Ltd., nitrogen 500 mg/l, phosphate ($P_2O_5$) 1,000 mg/l, potassium ($K_2O$) 150 mg/l, pH 6 to 7) as a medium base material, and then allium (cultivar "Tyoetsunegi", manufactured by Kyowa Seed Co., Ltd.) was sown and implanted in the base material. The day before transplanting, the granular fertilizer 3 in a total amount of 100 g was applied from above the tray such that the fertilizer was applied uniformly among the total 128 cells to obtain nursery bed for transplantation. From the granule mass shown in Table 1, the number of granules per cell was calculated to be 204 granules/cell.

Comparative Example 5

A nursery bed for transplantation was produced in the same manner as that in Example 7 except that in Example 7, the granular fertilizer 3 was replaced by a coated fertilizer Micro Long Total 201, 70 type (trade name, manufactured by Chisso Asahi Fertilizer Co., Ltd., granule size 1.0 mm to 1.5 mm, about 350 granules/g, nitrogen 12%, phosphate ($P_2O_5$) 10%, potassium ($K_2O$) 11%). The resultant was named Comparative Example 5.

Cultivation Test 2

Using the nursery beds produced in Example 7 and Comparative Example 5, raising seedling was performed for 60 days and the state of seedlings were examined. The raising seedling was performed in a greenhouse with a transparent polyolefin film (trade name: Agritop High Power, manufactured by Chisso Corporation) extended thereover, by a conventional method without heating except that sufficient watering was performed.
As a result of Cultivation Test 2, Example 7 showed a continued fertilizer efficiency and seedlings of good quality were obtained. Further, Example 5 showed floating and loss of fertilizer granules upon watering and in addition the fertilizer was dropped upon pulling of the seedlings after completion of raising seedling, so that it was not suited for nursery bed for transplantation.

INDUSTRIAL APPLICABILITY

The nursery bed for transplantation according to the present invention is particularly suited for cultivation of plants by cell raising seedling using connected-type pots for raising seedlings.

**Claims**

1. A nursery bed for transplantation formed in a connected-type pot for raising seedlings, comprising:

   a medium layer being made of medium base materials;
   a granular fertilizer layer placed on an upper part of the medium layer, being made of granular fertilizers; and
   seeds or plants;

   wherein the granular fertilizers contain a slow release nitrogen fertilizer, include 70 mass% or more granules having a granule size of 1 mm or more, and a maximum granule size of the fertilizer is 2 mm or less.

2. A nursery bed for transplantation according to claim 1, wherein the mass of the granule of the fertilizers is 0.5 to 5 mg per granule and a filling amount of the granular fertilizer in the cell is 10 to 1,000 granules/cell.

3. A nursery bed for transplantation according to claim 1 or 2, wherein the granular fertilizer contains 0.001 to 10 mass% of a water-soluble nitrogen nutrient.

4. A nursery bed for transplantation according to any one of claims 1 to 3, wherein the slow release nitrogen fertilizer is at least one selected from the group consisting of: acetaldehyde-condensed urea, isobutylaldehyde-condensed urea, a methylol-urea polymerization fertilizer, and a formaldehyde-amended urea fertilizer.

5. A nursery bed for transplantation according to claim 4, wherein the granular fertilizer contains a hardly water-soluble phosphate fertilizer and/or a water-repellent substance.

6. A method of preparing the nursery bed according to any one of claims 1 to 5, comprising:

   filling medium base materials in bottoms of a connected-type raising seedling pot to form a medium layer;
   sowing; and then
   forming a granular fertilizer layer in a period of time from the sowing to the day before transplantation thereof.

7. A method of cultivating a plant comprising using the nursery bed for transplantation according to any one of claims 1 to 5.

Fig. 1

Fig. 2

Fig. 3

**European Patent Office**

**EUROPEAN SEARCH REPORT**

Application Number

EP 06 00 0709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 014, no. 109 (C-0695), 28 February 1990 (1990-02-28) & JP 01 312933 A (ASAHI CHEM IND CO LTD), 18 December 1989 (1989-12-18) * abstract * | 1,3,4,6, 7 | INV. A01G1/00 A01G9/10 |
| A,D | PATENT ABSTRACTS OF JAPAN vol. 1996, no. 01, 31 January 1996 (1996-01-31) & JP 07 236352 A (CHISSO ASAHI HIRYO KK), 12 September 1995 (1995-09-12) * abstract * | 1,6,7 | |
| A,D | PATENT ABSTRACTS OF JAPAN vol. 1998, no. 05, 30 April 1998 (1998-04-30) & JP 10 000019 A (SUMIKA NOGYO SHIZAI KK; SUMITOMO CHEM CO LTD), 6 January 1998 (1998-01-06) * abstract * | 1,6,7 | TECHNICAL FIELDS SEARCHED (IPC) |
| A | PATENT ABSTRACTS OF JAPAN vol. 1999, no. 11, 30 September 1999 (1999-09-30) & JP 11 157967 A (FUJI SHIRISHIA KAGAKU KK), 15 June 1999 (1999-06-15) * abstract * | 1,6,7 | A01G |
| A | CN 1 263 077 A (CHEN GUANGTIAN) 16 August 2000 (2000-08-16) * abstract * | 1,6,7 | |

The present search report has been drawn up for all claims

| Place of search | Date of completion of the search | Examiner |
|---|---|---|
| The Hague | 30 March 2006 | Caldentey Pozo, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 680 954 A1**

**ANNEX TO THE EUROPEAN SEARCH REPORT
ON EUROPEAN PATENT APPLICATION NO.**
EP 06 00 0709

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2006

| Patent document cited in search report | | Publication date | Patent family member(s) | | Publication date |
|---|---|---|---|---|---|
| JP 01312933 | A | 18-12-1989 | NONE | | |
| JP 07236352 | A | 12-09-1995 | JP | 3558677 B2 | 25-08-2004 |
| JP 10000019 | A | 06-01-1998 | NONE | | |
| JP 11157967 | A | 15-06-1999 | NONE | | |
| CN 1263077 | A | 16-08-2000 | NONE | | |

EPO FORM P0459

For more details about this annex : see Official Journal of the European Patent Office, No. 12/82